# EUROPÄISCHE PATENTSCHRIFT

(11) **EP 1 288 561 B1**
(45) Veröffentlichungstag und Bekanntmachung des Hinweises auf die Patenterteilung: **07.03.2007**
(21) Anmeldenummer: 01129770.2
(22) Anmeldetag: 13.12.2001
(51) Int. Cl.: F21S 8/00, F21V 14/02, F21V 11/00, F21W 111/00, F21Y 103/02, F21Y 101/02

(54) **Leuchtanlage, insbesondere als Gefahrenfeuer, sowie Windrotoranlage mit Leuchtanlage**
Light assembly, in particular hazard light and wind rotor assembly with such a light assembly
Dispositif d'éclairage, notamment dispositif de signalisation d'urgence et éolienne avec un tel dispositif

(30) Priorität: 31.08.2001 DE 20114306 U
(43) Veröffentlichungstag der Anmeldung: 05.03.2003
(73) Patentinhaber: aqua signal Aktiengesellschaft, 28307 Bremen (DE)
(72) Erfinder: Rohlfing, Ralph, 28844 Weyhe (DE); Serfass, Wolfgang, 28219 Bremen (DE)
(74) Vertreter: Heiland, Karsten

(56) Entgegenhaltungen:
- WO-A-90/07675
- WO-A-98/30834
- CH-A- 185 517
- DE-U1- 29 604 484
- US-A- 3 805 052
- US-A- 3 852 584
- US-B1- 6 278 382

## Beschreibung

Die Erfindung betrifft eine Leuchtanlage, insbesondere als Gefahrenfeuer, Hindernisfeuer oder Tag- und Nachtkennzeichen, mit mindestens einer Leuchte, wobei in einem Gehäuse mindestens ein Leuchtmittel angeordnet ist, und mit folgenden Merkmalen:
a) das Leuchtmittel ist ringförmig oder teilringförmig ausgebildet und definiert eine Ringachse,
b) dem Leuchtmittel zugeordnet ist mindestens eine erste, ganz oder teilweise um eine Rotationsachse umlaufende Reflektionsfläche,
c) Ringachse und Rotationsachse verlaufen parallel oder sogar koaxial zueinander,
d) die erste Reflektionsfläche ist unterhalb des Leuchtmittels angeordnet,
e) eine zweite Reflektionsfläche liegt der ersten Reflektionsfläche relativ zum Leuchtmittel gegenüber.

Vorzugsweise geht es um Leuchtanlagen für Luftfahrthindernisse, Off-Shore-Anlagen oder Landeplätze, wie Windrotoren, Hochhäuser, Viadukte, Türme, Bohrplattformen oder Hubschrauberlandeplätze.

Derartige Leuchtanlagen sollen möglichst weithin sichtbar sein. Zugleich können bestimmte Bereiche ausgespart bleiben. So müssen beispielsweise Leuchten auf Luftfahrthindernissen nur für Luftfahrzeuge sichtbar sein, nicht jedoch für Personen unterhalb der Luftfahrthindernisse. Die Personen würden von dem abgestrahlten Licht geblendet werden. Davon abgesehen soll das Licht aber in möglichst alle Himmelsrichtungen abstrahlen.

Aus der US 6,278,382 ist eine Leuchte mit um eine aufrechte Achse umlaufendem Leuchtmittel und ebenfalls umlaufenden Reflektoren bekannt. Das abgestrahlte Licht streut relativ breit nach oben und unten.

Aufgabe der vorliegenden Erfindung ist es, eine Leuchtanlage zu schaffen, die ein umlaufend gerichtetes, kräftiges Licht abgibt, welches jedoch für Personen unterhalb der Leuchtanlage nicht sichtbar ist. Die erfindungsgemäße Leuchtanlage ist hierzu durch folgende Merkmale gekennzeichnet:
f) eine äußere umlaufende Grenze der ersten Reflektionsfläche liegt in einer Grenzebene, welche durch das Leuchtmittel hindurchgeht oder entlang einer Oberseite des Leuchtmittels verläuft,
g) die zweite Reflektionsfläche ist relativ zur ersten Reflektionsfläche schlechter reflektierend ausgebildet.

Ringachse und Rotationsachse der Leuchtanlage sind vorzugsweise vertikal (senkrecht zur Erdoberfläche) angeordnet. Entsprechend wird das Licht in erster Linie unter einem Winkel zu den genannten Achsen abgestrahlt, insbesondere oberhalb einer radialen Ebene. In Richtungen unterhalb der radialen Ebene soll möglichst wenig Licht abgestrahlt werden.

Die Leuchtanlage ist vorzugsweise als Blitzleuchtanlage ausgebildet, mit einer Blitzleuchte als Leuchte und Blitzleuchtmittel als Leuchtmittel. Auch ist dann üblicherweise eine externe oder interne elektronische Schaltung zur Ansteuerung des Blitzleuchtmittels vorgesehen.

Die Reflektionsfläche kann gegenüber dem Leuchtmittel zur Bündelung des Lichts konkav ausgebildet sein. Besonders vorteilhaft ist ein parabolischer Querschnitt - auch teilparabolisch - bei Betrachtung eines Schnitts parallel zur Rotationsachse und diese berührend. Dadurch ist eine besonders gute Bündelung des Lichts erzielbar.

Vorzugsweise ist das Leuchtmittel in einem Brennpunkt der zumindest teilweise parabolischen ersten Reflektionsfläche angeordnet. Da ein ringförmig umlaufendes Leuchtmittel vorgesehen und auch die Reflektionsfläche entsprechend umlaufend ausgebildet ist, ergeben sich in umlaufender Richtung beliebig viele Brennpunkte hintereinander unter Bildung einer umlaufenden Brennlinie. Der Brennpunkt kann auch durch einen Teil der ersten Reflektionsfläche definiert sein, etwa bei nur teilweise parabolischer Gestaltung der ersten Reflektionsfläche.

Die erste Reflektionsfläche und das Leuchtmittel sind derart ausgebildet und angeordnet, dass das Licht nur in einen Raum oberhalb einer vorzugsweise durch das Leuchtmittel gehenden Senkrechten zur Rotationsachse abgestrahlt wird. Durch Rotation der Senkrechten um die Rotationsachse wird eine Rotationsebene, vorzugsweise Leuchtebene aufgespannt. Das Licht soll nur in den Raum oberhalb der Rotationsebene, eintreten. Bei Anordnung der Leuchtanlage mit Abstand zur Erdoberfläche, etwa auf einem Turm oder dergleichen, ist das Licht dann nur für Luftfahrzeuge sichtbar, nicht jedoch für Personen am Boden.

Vorzugsweise ist die erste Reflektionsfläche im Wesentlichen unterhalb des Leuchtmittels angeordnet, wobei eine äußere umlaufende Grenze der ersten Reflektionsfläche in einer als Grenzebene bezeichneten Rotationsebene liegt, die durch das Leuchtmittel hindurch geht oder knapp außerhalb des Leuchtmittels verläuft. Bevorzugt ist eine Anordnung der ersten Reflektionsfläche relativ zum Leuchtmittel derart, dass die Grenzebene entlang einer Oberseite des Leuchtmittels verläuft. Die "Oberseite" des Leuchtmittels ergibt sich durch eine aufrechte (vertikale) Anordnung der Rotationsachse. Die genannte umlaufende Grenze der ersten Reflektionsfläche stellt einen Übergang zu nicht reflektierenden Bereichen oder eine umlaufende Kante dar.

Die erste Reflektionsfläche weist eine innere umlaufende Grenze auf, die nahe einer als Rotationsebene definierten zweiten Grenzebene an einer Unterseite des Leuchtmittels verläuft. Auch kann diese zweite Grenzebene entlang der Unterseite des Leuchtmittels oder durch das Leuchtmittel hindurch verlaufen.

Ebenfalls vorzugsweise ist eine zweite Reflektionsfläche vorgesehen, die relativ zum Leuchtmittel der ersten Reflektionsfläche gegenüberliegt. Das ringförmig umlaufende Leuchtmittel definiert eine (mittige) Leuchtmittelebene. Die erste Reflektionsfläche liegt im Wesentlichen auf einer Seite der Leuchtmittelebene und die zweite Reflektionsfläche im Wesentlichen auf der anderen Seite der Leuchtmittelebene. Kleinere Überschneidungen der Leuchtmittelebene sollen nicht ausgeschlossen sein.

Auch die zweite Reflektionsfläche kann zumindest teilweise parabolisch ausgebildet sein, ebenso wie die erste Reflektionsfläche. Bevorzugt ist eine Ausführung, bei der sich die Form zumindest von Teilen der beiden Reflektionsflächen als einander gegenüber liegende Äste derselben Parabel darstellen. Die Parabelachse geht vorzugsweise durch das Leuchtmittel und ist gegenüber der Leuchtmittelebene abgewinkelt, derart, dass gedachte und ins Unendliche reichende Verlängerungen der beiden Parabeläste oberhalb der Leuchtmittelebene verlaufen.

Nach einem weiteren Gedanken der Erfindung weist die zweite Reflektionsfläche relativ zur ersten Reflektionsfläche eine wesentlich schlechter reflektierende Oberfläche auf. Vorzugsweise ist die erste Reflektionfläche verspiegelt und die zweite Reflektionsfläche geschwärzt. Ziel ist eine möglichst gute Reflektion an der ersten Reflektionsfläche. Die zweite Reflektionsfläche soll möglichst wenig reflektieren. Sofern ein Bruchteil des Lichts gleichwohl reflektiert wird, soll dieser Bruchteil zielgerichtet reflektiert werden.

Vorteilhafterweise ist das Leuchtmittel relativ zur ersten Reflektionsfläche und parallel zur Ringachse oder Rotationsachse verstellbar. Dadurch lassen sich Toleranzen in der Produktion schnell ausgleichen. Auch kann auf diese Weise ein nahe einer horizontalen Ebene liegender Abstrahlungswinkel eingestellt werden.

Als Leuchtmittel ist vorzugsweise eine ringförmige Xenon-Blitzlampe vorgesehen. Andere ringförmige Leuchtmittel sind ebenfalls verwendbar. Alternativ können mehrere LED in einer ringförmigen Reihe angeordnet sein und so ein ringförmiges (oder teilringförmiges) Leuchtmittel bilden.

In einer vorteilhaften Ausführungsform der Erfindung ist eine umlaufende zylindrische lichtdurchlässige Abdeckung vorgesehen, die möglichst dicht an einer äußeren umlaufenden Grenze der ersten Reflektionsfläche angeordnet ist. Sofern eine zweite Reflektionsfläche vorgesehen ist, soll auch hierzu die Abdeckung möglichst ohne Abstand angeordnet sein. Die Abdeckung weist eine umlaufende Wandung auf, die sich parallel zur Rotationsachse erstreckt. Ein Abstand von wenigen mm zwischen der Wandung und den Reflektionsflächen ist unschädlich. Je geringer der Abstand zwischen der Wandung der Abdeckung und den Reflektionsflächen ist, um so geringer ist auch die aus der Leuchte austretende Streustrahlung.

Vorteilhafterweise weist die Abdeckung zumindest in einem umlaufenden Teilbereich lichtbrechende Elemente auf. Diese können beispielsweise als prismatische und/oder katadioptrische Ringe ausgebildet sein. Ziel ist eine Ablenkung der direkt vom Leuchtmittel kommenden Strahlen in eine Richtung möglichst senkrecht zur Rotationsachse bzw. Ringachse oder etwas oberhalb der Senkrechte hierzu, also oberhalb einer horizontalen Richtung.

Nach einem weiteren Gedanken der Erfindung ist eine umlaufende konische lichtdurchlässige Abdeckung vorgesehen, mit einer umlaufenden Hauptwandung, deren Durchmesser in Richtung auf das Leuchtmittel zunimmt und mit einem an den größten Durchmesser der Hauptwandung nach Innen anschließenden Absatz, der sich in Richtung auf die erste Reflektionsfläche erstreckt. Der Absatz bildet vorzugsweise eine Fortsetzung einer äußersten Tangente der ersten Reflektionsfläche.

Nach einem anderen Gedanken der Erfindung ist die zweite Reflektionsfläche mit Blenden versehen, die eine Abstrahlung des reflektierten Lichts in Richtung senkrecht zur Rotationsachse verhindern. Die zweite Reflektionsfläche bildet allein oder zusammen mit den Blenden eine Lichtfalle. Eventuelle Streustrahlung wird dadurch weiter vermindert.

Vorteilhafterweise fällt das vom Leuchtmittel abgestrahlte Licht auf die erste Reflektionsfläche, tritt direkt aus der Leuchte aus oder fällt auf weitere Teile im Gehäuse der Leuchte, wobei die weiteren Teile Mittel zur Vermeidung einer Reflektion des Lichts aufweisen. Die Mittel können beispielsweise Blenden, Blendenringe oder besonders schlecht reflektierende Oberflächenbeschichtungen, etwa geschwärzte Oberflächen sein. Auch hier ist das Ziel die Vermeidung von Streustrahlung außerhalb der Leuchte.

Nach einem weiteren Gedanken der Erfindung ist ein Träger vorgesehen, auf dem der erste Reflektor, eine Platine zur Aufnahme elektrischer Bauteile und ein Platinengehäuse gehalten sind. Der Träger kann ein mittig angeordnetes und entlang der Rotationsachse bzw. Ringachse verlaufendes Bauteil sein, auf das die genannten Teile aufgesteckt und dort gesichert sind. Vorzugsweise ist auch die zweite Reflektionsfläche unmittelbar im Anschluss an die erste Reflektionsfläche auf dem Träger gehalten.

Bevorzugtes Anwendungsgebiet der erfindungsgemäßen Leuchtanlage ist eine Windrotoranlage. Letztere besteht bekanntermaßen zumindest aus einem hohen Mast, an dessen Spitze eine Nabe mit Windrotor gehalten ist. Üblicherweise ist auf der Mastspitze eine Leuchtanlage angeordnet. Diese ist bei höheren Masten als Blitzleuchte und niedrigeren Masten als Blinkleuchte ausgebildet. Die Erfindung betrifft auch diese beiden Leuchtentypen.

Weitere Merkmale der Erfindung sind den Ansprüchen und der Beschreibung entnehmbar. Ausführungsbeispiele der Erfindung werden nachfolgend anhand von Zeichnungen näher erläutert. Es zeigen:
- Fig. 1: einen Vertikalschnitt durch eine Leuchte,

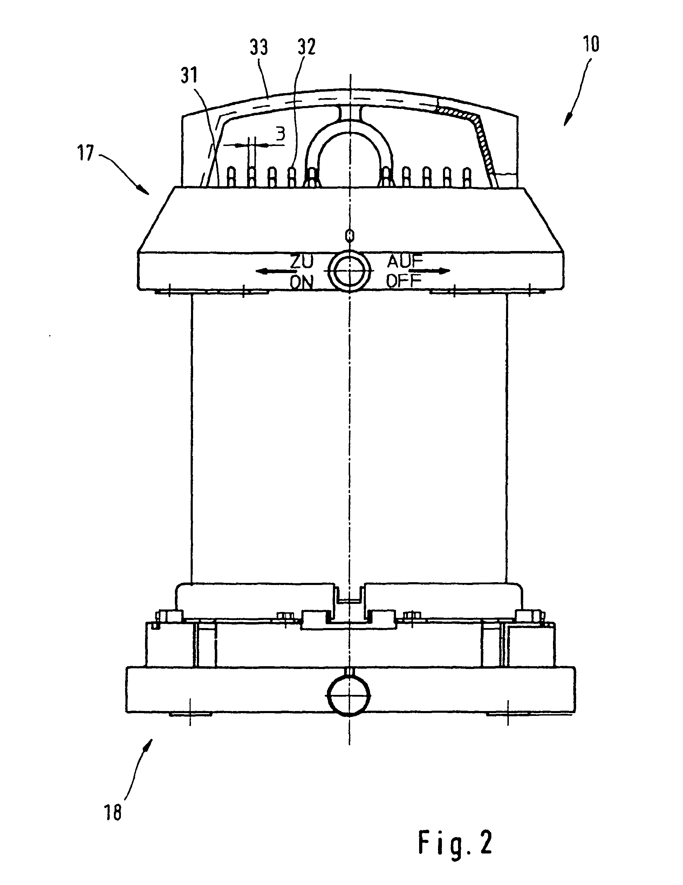

- Fig. 2: eine Seitenansicht der Leuchte gemäß Fig. 1,
- Fig. 3: eine Explosionszeichnung von innerhalb der Leuchte gemäß Fig. 1 angeordneten Bauteilen,
- Fig. 4: die Bauteile gemäß Fig. 3 in zusammengesetzter Darstellung,
- Fig. 5: einen Vertikalschnitt durch eine Leuchte ähnlich Fig. 1, jedoch mit abgewandelter Abdeckung,
- Fig. 6: einen Teil des Strahlenverlaufs der Leuchte gemäß Fig. 5,
- Fig. 7: einen anderen Teil des Strahlenverlaufs der Leuchte gemäß Fig. 5,
- Fig. 8: eine qualitative Darstellung der Lichtstärke in einiger Entfernung von der Leuchte für die Ausführungsform der Fig. 1,
- Fig. 9: eine qualitative Darstellung ähnlich Fig. 8, jedoch für die Ausführungsform der Fig. 7,
- Fig. 10: eine weitere Abwandlung der in den Fig. 1 und 7 gezeigten Leuchten,
- Fig. 11: zwei übereinander zu einer Einheit zusammengefassten Leuchten im Vertikalschnitt,
- Fig. 12: eine Seitenansicht der Ausführungsform gemäß Fig. 11,
- Fig. 13: eine Windrotoranlage mit einer erfindungsgemäßen Leuchtanlage.

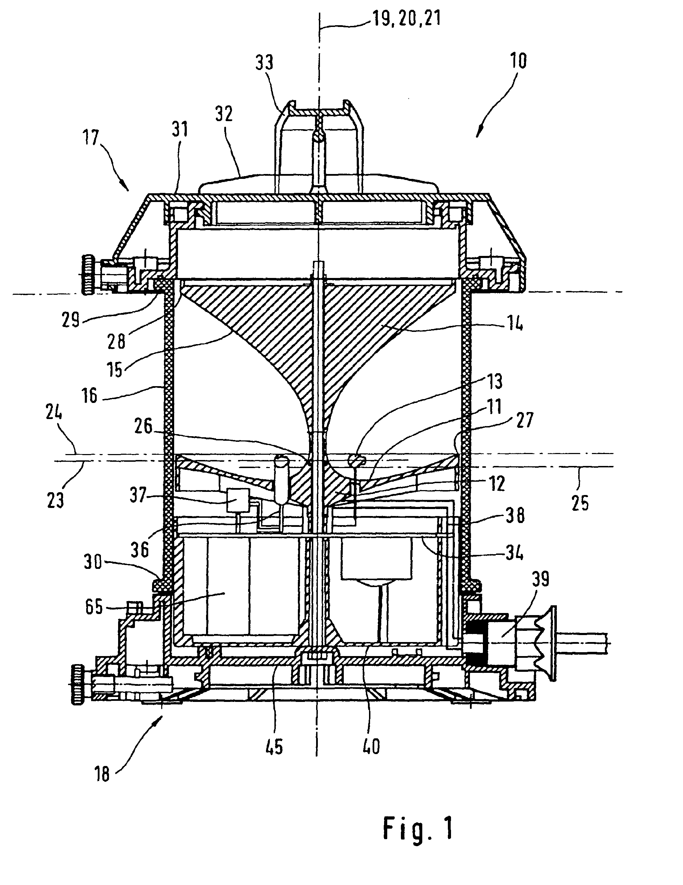

Gemäß Fig. 1 weist eine Leuchte 10 einen mit einer ersten Reflektionsfläche 11 versehenen ersten Reflektor 12, ein ringförmiges Leuchtmittel 13, einen zweiten Reflektor 14 mit einer zweiten Reflektionsfläche 15, eine lichtdurchlässige Abdeckung 16, ein Gehäuseoberteil 17 und ein Gehäuseunterteil 18 auf. Die drei zuletzt genannten Teile bilden ein Gehäuse der Leuchte 10.

Das Leuchtmittel 13 ist eine Xenon-Blitzlampe, die durch ihre Ringform eine Ringachse 19 definiert, die koaxial zu einer Mittenachse 20 der Leuchte 10 und außerdem koaxial zu einer Rotationsachse 21 verläuft. Diese ergibt sich durch die umlaufende, insbesondere rotationssymmetrische Form der beiden Reflektionsflächen 11 und 15.

Üblicherweise ist die Leuchte 10 in der gezeigten aufrechten Position angeordnet mit einer vertikalen Anordnung der Achsen 19, 20, 21, d.h. senkrecht zur Erdoberfläche oder einer andere Bezugsfläche.

Im Querschnitt gemäß Fig. 1 verläuft die erste Reflektionsfläche 11 entlang einer Parabel und geht - ebenfalls entlang der Parabel - in die zweite Reflektionsfläche 15 über. Abweichungen von der Parabelform sind möglich.

Die erste Reflektionsfläche 11 bzw. der erste Reflektor 12 ist auf einer Seite des Leuchtmittels 13, nämlich unterhalb desselben angeordnet. Entsprechend ist die zweite Reflektionsfläche 15 bzw. der zweite Reflektor 14 gegenüberliegend, also oberhalb des Leuchtmittels 13 angeordnet.

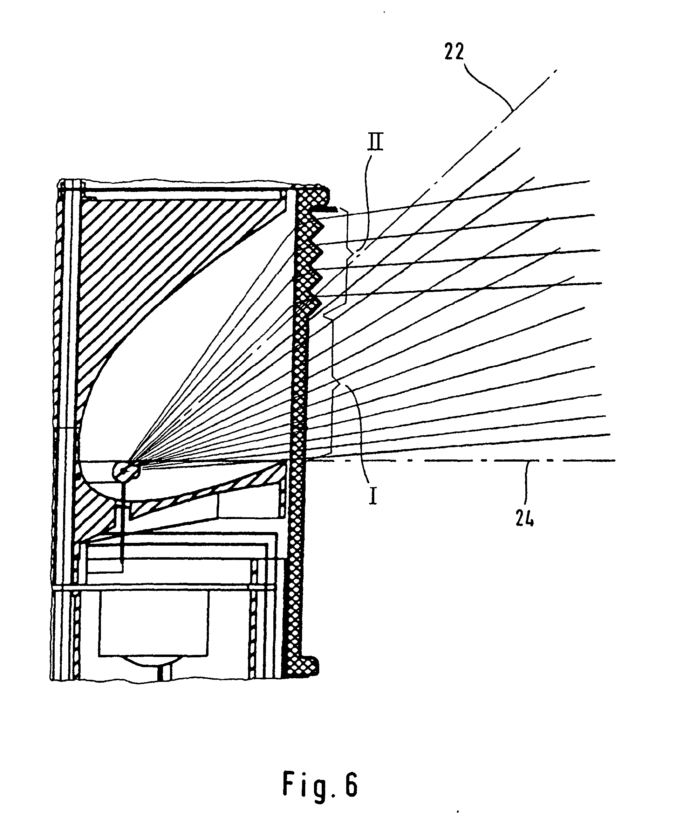

Die durch die beiden Reflektionsflächen 11, 15 gebildete Parabel weist mit ihrer Parabelachse nicht in horizontaler Richtung, sondern ist demgegenüber etwa um einen Achtelkreis, insbesondere um 43° aufwärts gerichtet, siehe Fig. 6.

Durch das Leuchtmittel 13 und die Anordnung desselben werden drei Ebenen definiert, nämlich eine mittig durch das Leuchtmittel 13 gehende Leuchtmittelebene 23, eine obere Grenzebene 24 und eine untere Grenzebene 25. Die obere Grenzebene 24 berührt eine umlaufende Oberseite des Leuchtmittels 13. Entsprechend berührt die untere Grenzebene 25 eine umlaufende Unterseite des Leuchtmittels 13.

Das Leuchtmittel 13 ist etwa in einem Brennpunkt einer Parabel angeordnet. Letztere ist zumindest durch einen zum Leuchtmittel 13 benachbarten Teil der Reflektionsflächen gebildet.

Die erste Reflektionsfläche 11 erstreckt sich von einem radial inneren Grenzpunkt 26 bis zu einem radial äußeren Grenzpunkt 27. Der äußere Grenzpunkt 27 liegt bezüglich der Rotationsachse 21 etwa auf der Höhe des Leuchtmittels 13, gemäß Fig. 1 genau in der oberen Grenzebene 24. Dadurch kann das vom Leuchtmittel 13 ausgehende direkte Licht nur oberhalb einer horizontalen Richtung abgestrahlt werden. Die horizontale Richtung ergibt sich durch die Lage des äußeren Grenzpunkts 27, der hier in der oberen Grenzebene 24 liegt.

Der innere Grenzpunkt 26 liegt innerhalb des Leuchtmittels 13 und möglichst zwischen den beiden Grenzebenen 24, 25, gemäß Fig. 1 zwischen der unteren Grenzebene 25 und der Leuchtmittelebene 23. Oberhalb des inneren Grenzpunkts 26 schließt die zweite Reflektionsfläche 15 an.

Der innere Grenzpunkt 26 markiert zugleich den Beginn der zweiten (oberen) Reflektionsfläche 15, die weit oberhalb und radial außerhalb des Leuchtmittels 13 an einem äußeren Grenzpunkt 28 endet. Auf Grund der aufwärts gekippten Parabelform der miteinander verbundenen Reflektionsflächen 11 und 15 bildet letztere im Raum nahezu eine Kegelform, während die erste Reflektionsfläche 11 eine umlaufende Vertiefung darstellt. Die Kegelform des zweiten Reflektors 14 verjüngt sich in Richtung auf den ersten Reflektor 12, jedoch mit einem schmalsten Querschnitt nicht am inneren Grenzpunkt 26 sondern mit Abstand zu diesem, in Fig. 1 etwa knapp oberhalb der oberen Grenzebene 24.

Die beiden Reflektoren 12, 14 sind aus ozonbeständigem Polycarbonat hergestellt und in spezieller Weise beschichtet. Der erste Reflektor 12 ist besonders gut reflektierend, möglichst hochglanz spiegelnd beschichtet, insbesondere verchromt, während der zweite Reflektor 14 möglichst schlecht reflektieren soll und hierzu eine geschwärzte bzw. matt schwarz lackierte Oberfläche aufweist.

Die Abdeckung 16 ist als zylindrische Röhre ausgebildet und weist einen Innendurchmesser auf, der gerade zur Aufnahme des erste Reflektors 12 ausreicht. Entsprechend liegt der äußere Grenzpunkt 27 dicht an der Abdeckung 16 oder weist einen nur geringen Abstand hierzu auf. Gleiches gilt für den äußeren Grenzpunkt 28 des zweiten Reflektors 14. Geringe oder keine Abstände vermeiden die Entstehung von Streulicht. Die Abdeckung 16 ist aus lichtdurchlässigem, möglichst glasklarem Polycarbonat hergestellt.

Die zylindrische Abdeckung 16 weist an ihren offenen Enden unterbrochene oder umlaufende, (nach außen) quergerichtete Stege 29, 30 auf. Diese liegen am Gehäuseoberteil 17 und/oder Gehäuseunterteil 18 an oder sind mit diesen verbunden.

Das Gehäuseoberteil 17 ist nach Art eines Deckels ausgebildet und weist an seiner Oberseite 31 Kühlrippen 32 und einen Handgriff 33 auf. Das Gehauseoberteil ist mit der Abdeckung 16 durch eine kurze Drehung verbindbar, etwa nach Art eines Bajonettverschlusses.

Im Gehäuseunterteil 18 und zum Teil noch in der Abdeckung 16 sind unterhalb des ersten Reflektors 12 weitere Bauteile gehalten, nämlich eine Platine 34 mit elektrischen und elektronischen Bauteilen zumindest an einer Unterseite der Platine sowie ein topfartiges Platinengehäuse 35, in das die Platine 34 eingesetzt und dort vergossen ist. Die elektronischen Bauteile sind demnach vollständig eingebettet in Vergussmasse, wobei diese oberseitig abgeschirmt ist durch die Platine 34 und seitlich und unterseitig im Platinengehäuse 35 angeordnet ist.

Zwischen dem ersten Reflektor 12 und der Platine 34 ist Raum für Stecker und Kabel, für die Spannungsversorgung und für Anschlüsse des Leuchtmittels 13. Dieses weist parallel zur Ringachse gerichtete Anschlussdrähte 36 auf, die durch den ersten Reflektor 12 hindurchgehen und oberhalb der Platine an entsprechende elektrische Kabel einer Spannungsversorgung 37 angeschlossen sind. Letztere ist über Verbindungskabel 38 mit einem Kabeleinlass 39 im Gehäuseunterteil 18 verbunden. Der Kabeleinlass 39 ist an einer radialen Außenseite benachbart zur Abdeckung 16 angeordnet, etwa auf der Höhe einer Unterseite 40 des Platinengehäuses 35. Dieses weist im Bereich einer umlaufenden Seitenwand 41 eine axialgerichtete Nut 42 auf, die zum Kabeleinlass 39 benachbart angeordnet ist und in der die Verbindungskabel 38 zur Spannungsversorgung 37 auf der Platine 34 geführt sind.

Zweiter Reflektor 14, erster Reflektor 12 und Platine 34 mit Platinengehäuse 35 sind in besonderer Weise miteinander verbunden. Vorgesehen ist ein axialgerichteter, mittig angeordneter Träger, nämlich eine Stange 43, die durch entsprechende, axiale Bohrungen der genannten Bauteile hindurchtritt. Die Stange 43 weist einseitig einen Schraubenkopf 44 auf, der außen an einer Unterseite 45 des Gehäuseunterteils 18 anliegt. Reflektoren 11 und 14 sowie das Platinengehäuse 35 sind demnach durch die Stange 43 mit dem Gehäuseunterteil 18 verbunden. Ein freies Ende 46 der Stange 43 ragt aus dem zweiten Reflektor 14 heraus und ist mit Sicherungsmitteln versehen, etwa mit einem Gewinde und einer darauf sitzenden Mutter 47. Durch Anziehen derselben werden die Reflektoren 12, 14 sowie das Platinengehäuse 35 an das Gehäuseunterteil 18 angepresst.

Das Platinengehäuse 35 weist mittig eine axialgerichtete Hülse 48 auf, die sich von der Unterseite 40 bis durch die Platine 34 erstreckt. Beim Zusammenbau stößt die Hülse 48 an einer der ersten Reflektionsfläche 11 gegenüberliegenden, hülsenartigen Fortsatz 49 (zur Aufnahme der Stange 43) des ersten Reflektors 12 an.

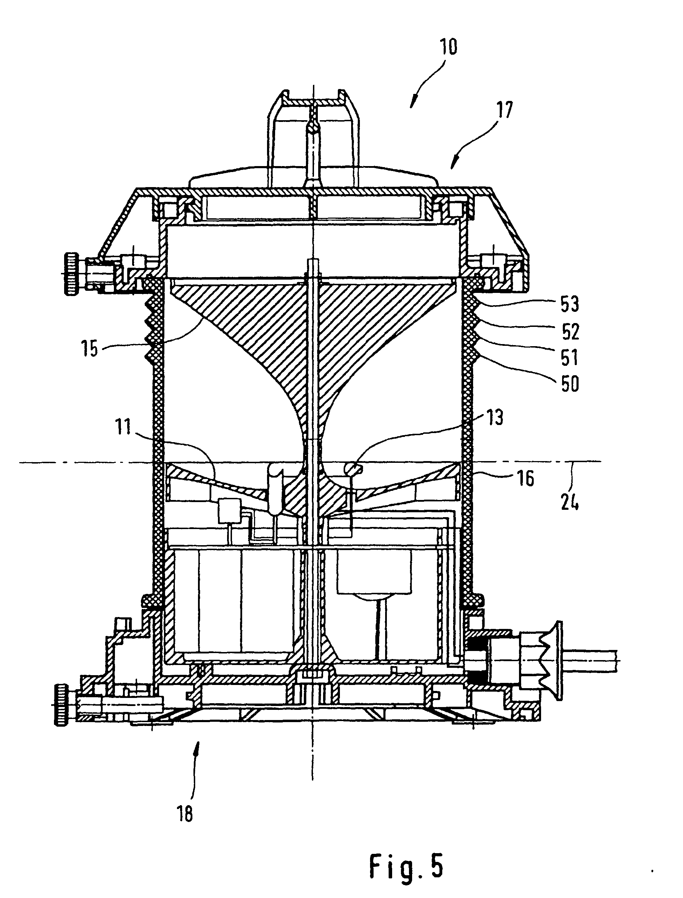

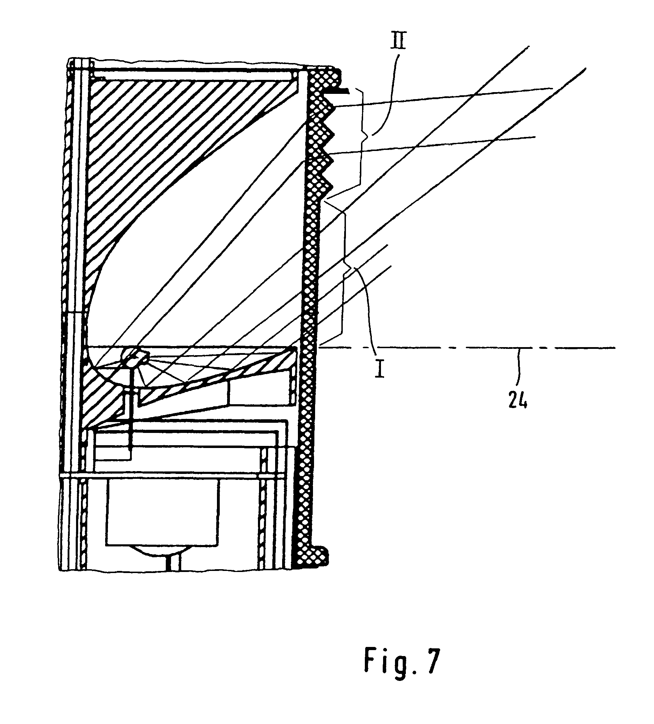

Fig. 5 zeigt eine gegenüber Fig. 1 abgewandelte Ausführungsform. Gemäß Fig. 5 weist die Abdeckung 16 nahe dem Gehäuseoberteil 17 umlaufende prismatische Elemente, nämlich Prismenringe 50, 51, 52, 53 auf. Diese brechen das Licht in Richtung senkrecht zur Mittenachse 20, siehe Fig. 6 und 7. Fig. 6 zeigt die direkt vom Leuchtmittel 13 abgegebenen Lichtstrahlen. In einem Bereich I nahe dem ersten Reflektor 12 ist ein (im Schnitt) kegelförmiges Strahlenbündel erkennbar, dessen Hauptrichtung bei aufrechter Anordnung der Leuchte 10 etwas oberhalb der oberen Grenzebene 24 liegt.

Die Prismenringe 50-53 bilden einen Bereich II. Die in diesem Bereich II aus der Abdeckung 16 austretende Strahlung verläuft nahezu parallel zur oberen Grenzebene 24, sodass der horizontal gerichtete Anteil des Lichts (bei aufrechter Anordnung der Leuchte 10) durch die Prismenringe 50-53 deutlich erhöht wird, nämlich durch Umlenkung der ohnehin gegenüber der Grenzebene 24 am stärksten abgewinkelten, vom Leuchtmittel 13 ausgehenden Lichtstrahlen.

In ähnlicher Weise werden die vom ersten Reflektor 12 reflektierten Lichtstrahlen "verteilt". Im unteren Bereich I (nahe dem ersten Reflektor 12) sind die Lichtstrahlen gegenüber der Grenzebene 24 deutlich aufwärts gerichtet. Noch weiter aufwärts gerichtete Lichtstrahlen treten durch die Prismenringe 50-53 im Bereich II hindurch und werden in eine Richtung knapp oberhalb der Grenzebene 24 umgelenkt. Im Ergebnis bewirken die Prismenringe 50-53 eine deutliche Erhöhung des nahe der Grenzebene 24 abgestrahlten Lichts, und zwar sowohl für das vom Leuchtmittel 13 direkt abgestrahlte Licht als auch für das am ersten Reflektor 12 reflektierte Licht. Die genaue Gestaltung der Prismenringe 50-53 - Lage der lichtbrechenden Flächen - ist vom verwendeten Werkstoff abhängig und an diesen angepasst.

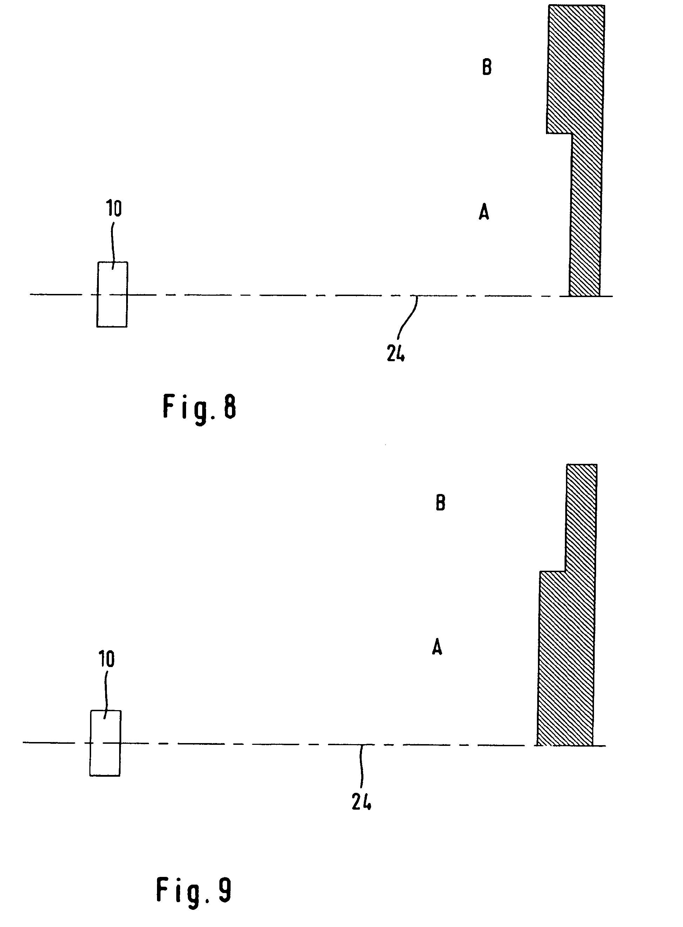

Die Fig. 8 und 9 zeigen eine qualitative Verteilung der Lichtstärke mit Abstand zur Leuchte 10. Dabei bezieht sich Fig. 8 auf die Ausführungsform der Fig. 1 und Fig. 9 auf die Ausführungsform der Fig. 5. Demnach ergibt sich bei der Ausführungsform der Fig. 5 mit den Prismenringen 50-53 in einiger Entfernung von der Leuchte 10 eine größere Lichtstärke nahe der oberen Grenzebene 24, siehe Abschnitt A in Fig. 9, und eine demgegenüber geringere Lichtstärke in einem daran anschließenden, höher gelegenen Abschnitt B.

Genau umgekehrt sind die Lichtstärkenverhältnisse bei der Ausführungsform gemäß Fig. 1. Dort ist die Lichtstärke in dem höheren Bereich B größer als in dem an die Grenzebene 24 angrenzenden Bereich A, siehe Fig. 8. In beiden Ausführungsformen nimmt die Lichtstärke oberhalb des Bereichs B langsam ab, während unterhalb des Bereichs A, also unterhalb der Grenzebene 24, so gut wie kein Licht abgestrahlt wird. Allenfalls Streulicht führt zu Lichterscheinungen in diesem Bereich. Wichtig in diesem Zusammenhang ist die nicht oder möglichst schwach reflektierende Gestaltung des zweiten Reflektors 14. Dessen Form muss deshalb nicht zwingend parabolisch sein, da ohnehin kaum oder kein Licht reflektiert wird. Wichtig ist aber die Erstreckung der zweiten Reflektorfläche 15 bis an die Abdeckung 16 heran; anderenfalls sollten zusätzliche lichtschluckende Elemente zur Vermeidung von Streulicht vorgesehen sein.

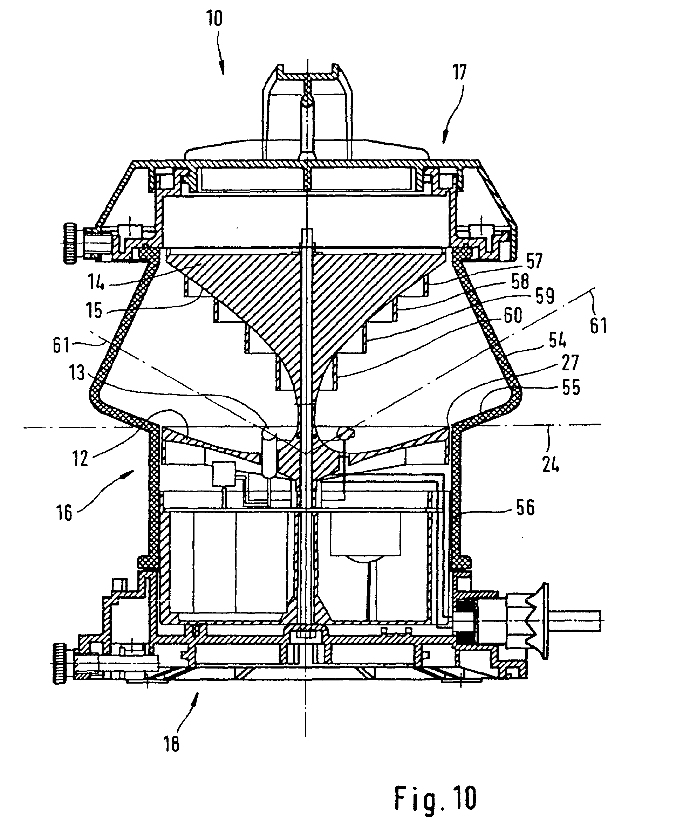

Eine nochmals geänderte Abdeckung 16 zeigt Fig. 10. Die Abdeckung 16 weist hier nahe dem Gehäuseoberteil 17 einen konischen Bereich mit einer umlaufenden Hauptwandung 54 auf, deren Durchmesser in Richtung auf die Grenzebene 24 zunimmt. Kurz vor Erreichen der Grenzebene 24 schließt an die Hauptwandung 54 ein nach Innen gerichteter Absatz 55 an, der die Durchmessererweiterung der konischen Form der Hauptwandung 54 genau ausgleicht und sich bis an den äußeren Grenzpunkt 27 erstreckt. In Richtung auf das Gehäuseunterteil 18 schließt an den Absatz 55 ein zylindrischer Bereich 56 an.

Eine Besonderheit gemäß Fig. 10 ist im Bereich des zweiten Reflektors 14 vorgesehen. Auf dessen Reflektionsfläche 15 sind Blendenringe 57, 58, 59, 60 angeordnet. Deren Wandungen erstrecken sich in axialer Richtung und sind zueinander konzentrisch angeordnet. Im Übrigen weisen die Blendenringe 57-60 jeweils gleiche Höhen in axialer Richtung auf. Entsprechend ergibt sich eine gestufte Anordnung, wie in Fig. 10 ersichtlich. Die Blendenringe 57-60 sind beidseitig möglichst schwach reflektierend beschichtet, insbesondere geschwärzt. Das vom Leuchtmittel 13 auf der zweiten Reflektionsfläche 15 auftreffende Licht wird von den Blendenringen 57-60 zurückgehalten, sodass der zweite Reflektor 14 noch weniger Licht reflektiert als in den Ausführungsformen der Fig. 1 und 7. Möglich ist auch ein Ersatz des zweiten Reflektors 14 durch passend ausgebildete Blendenringe 57-60.

Die konische Form eines Teils der Abdeckung 16 in Fig. 10 bewirkt eine Verringerung des Streulichts, da die Hauptwandung 54 etwa senkrecht zu einer Hauptrichtung des vom Leuchtmittel 13 und vom ersten Reflektor 12 ausgehenden Lichts angeordnet ist. Die Hauptrichtung ist in Fig. 10 durch eine Achse 61 angedeutet.

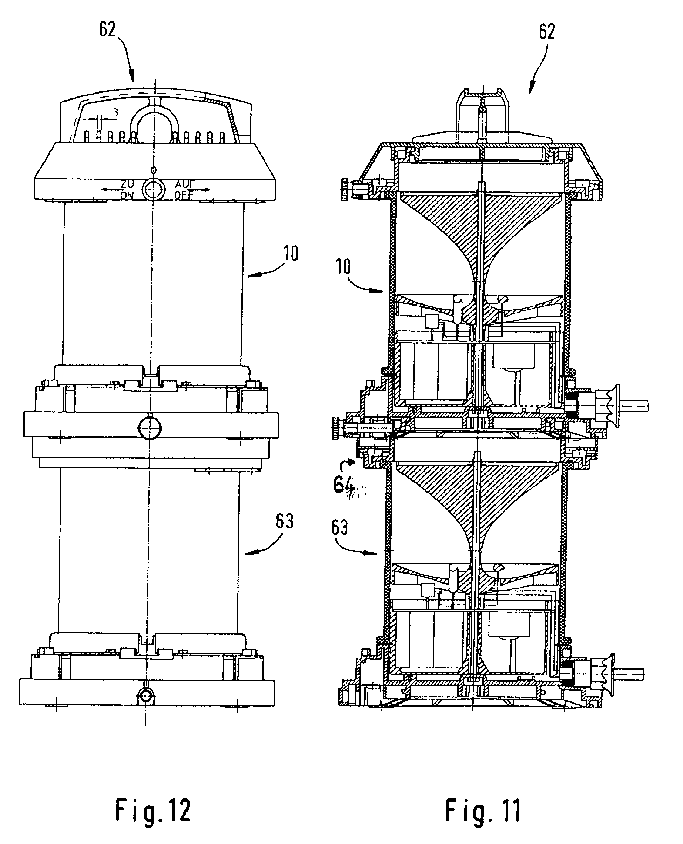

Eine Leuchtanlage 62 mit zwei übereinander angeordneten Leuchten 10 und 63 zeigen die Fig. 11 und 12. Die Leuchte 10 entspricht dabei der Ausführungsform gemäß Fig. 1. Abwandlungen entsprechend den weiter oben beschriebenen alternativen Ausführungsformen sind möglich. Eine Leuchte 10 weist etwa eine Höhe von 32 cm auf. Die Leuchtanlage 62 kommt auf eine Höhe von etwa 55 cm.

Ein Gehäuseoberteil 64 der unteren Leuchte 63 ist etwas anders und einfacher ausgebildet als das Gehäuseoberteil 17 der oberen Leuchte 10. Ziel ist die Möglichkeit einer einfachen Verbindung zwischen dem unteren Gehäuseoberteil 64 und dem oberen Gehäuseunterteil 18. Auch hier ist vorzugsweise eine durch Stecken und/oder Drehen der Leuchten 10, 63 herstellbare Verbindung vorgesehen.

In der Praxis strahlt die obere Leuchte 10 als Nachtkennung rotes Licht ab, während die untere Leuchte 63 als Tagkennung weißes Licht abgibt.

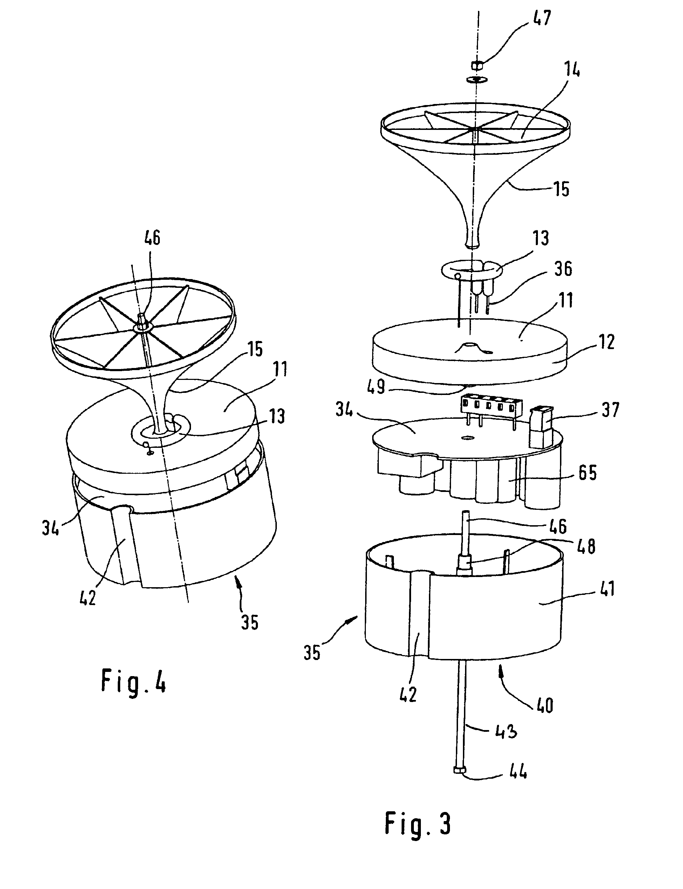

Eine Besonderheit besteht noch hinsichtlich der für jede Leuchte 10, 63 vorgesehenen Elektronik, auch bezüglich der voranstehend beschriebenen Ausführungsformen. Die als Leuchtmittel 13 vorgesehen Blitzlampe blitzt kurzzeitig hintereinander zweimal. Der Abstand zwischen diesen beiden Blitzen ist so kurz, dass - auf Grund der Trägheit des menschlichen Auges - optisch nur ein Blitz wahrnehmbar ist. Allenfalls aus nächster Nähe und bei genauerer Betrachtung sind zwei unmittelbar aufeinanderfolgende Blitze wahrnehmbar. Die im Platinengehäuse 35 eingegossene Elektronik beinhaltet unter anderem mehrere Kondensatoren 75, siehe Fig. 1 und Fig. 3. Diese werden so angesteuert, dass aufeinanderfolgende Teilentladungen durchgeführt werden. Vorzugsweise sind die Kondensatoren 65 dabei so geschaltet, dass alle Kondensatoren zugleich schrittweise entladen werden.

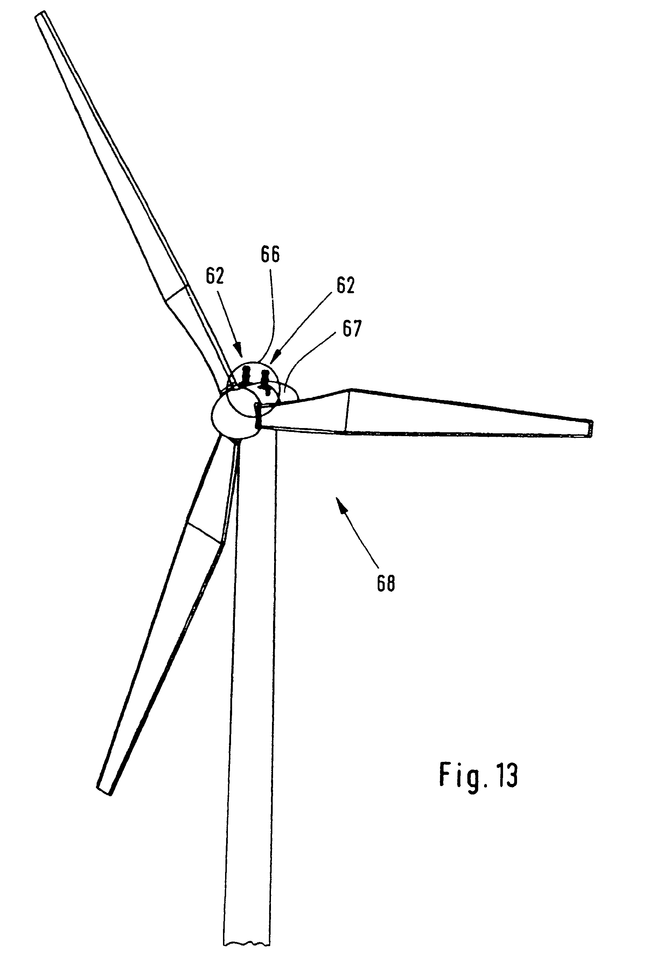

Fig. 13 zeigt die Anordnung einer Gruppe 66 von zwei erfindungsgemäßen Leuchtanlagen 62 auf einer Nabe 67 eines Windrotors 68. Es sind hier zwei Leuchtanlagen 62 vorgesehen, um bei jeder Stellung der Rotorblätter ein sichtbares Blitzsignal zu gewährleisten. In der einfachsten Ausführung besteht eine Leuchtanlage aus einer einzelnen Leuchte.

### Bezugszeichenliste:

- 10: Leuchte
- 11: erste Reflektionsfläche
- 12: erster Reflektor
- 13: Leuchtmittel
- 14: zweiter Reflektor
- 15: zweite Reflektionsfläche
- 16: Abdeckung
- 17: Gehäuseoberteil
- 18: Gehäuseunterteil
- 19: Ringachse
- 20: Mittenachse
- 21: Rotationsachse
- 22: Parabelachse
- 23: Leuchtmittelebene
- 24: obere Grenzebene
- 25: untere Grenzebene
- 26: innerer Grenzpunkt
- 27: äußerer Grenzpunkt
- 28: äußerer Grenzpunkt
- 29: Steg
- 30: Steg
- 31: Oberseite
- 32: Kühlrippen
- 33: Handgriff
- 34: Platine
- 35: Platinengehäuse
- 36: Drähte
- 37: Spannungsversorgung
- 38: Verbindungskabel
- 39: Kabeleinlass
- 40: Unterseite
- 41: Seitenwand
- 42: Nut
- 43: Stange
- 44: Schraubenkopf
- 45: Unterseite
- 46: Ende
- 47: Mutter
- 48: Hülse
- 49: Fortsatz
- 50: Prismenring
- 51: Prismenring
- 52: Prismenring
- 53: Prismenring
- 54: Haupwandung
- 55: Absatz
- 56: zylindrischer Bereich
- 57: Blendenring
- 58: Blendenring
- 59: Blendenring
- 60: Blendenring
- 61: Hauptrichtung
- 62: Leuchtanlage
- 63: Leuchte
- 64: Gehäuseoberteil
- 65: Kondensatoren
- 66: Gruppe
- 67: Nabe
- 68: Windrotor
- I: Lichtaustrittsbereiche
- II: Lichtaustrittsbereiche
- A: Bereiche unterschiedlicher Lichtstärke
- B: Bereiche unterschiedlicher Lichtstärke

## Patentansprüche

1. Leuchtanlage, insbesondere als Gefahrenfeuer, Hindernisfeuer oder Tag- und Nachtkennzeichen, mit mindestens einer Leuchte (10, 63), wobei in einem Gehäuse mindestens ein Leuchtmittel (13) angeordnet ist, und mit folgenden Merkmalen:
a) das Leuchtmittel (13) ist ringförmig oder teilringförmig ausgebildet und definiert eine Ringachse (19),
b) dem Leuchtmittel (13) zugeordnet ist mindestens eine erste, ganz oder teilweise um eine Rotationsachse (21) umlaufende Reflektionsfläche (11),
c) Ringachse (19) und Rotationsachse (21) verlaufen parallel oder sogar koaxial zueinander,
d) die erste Reflektionsfläche (11) ist unterhalb des Leuchtmittels (13) angeordnet,
e) eine zweite Reflektionsfläche (15) liegt der ersten Reflektionsfläche (11) relativ zum Leuchtmittel (13) gegenüber,
**gekennzeichnet durch** folgende Merkmale:
f) eine äußere umlaufende Grenze (27) der ersten Reflektionsfläche (11) liegt in einer Grenzebene (24), welche **durch** das Leuchtmittel (13) hindurch geht oder entlang einer Oberseite des Leuchtmittels verläuft,
g) die zweite Reflektionsfläche (15) ist relativ zur ersten Reflektionsfläche (11) schlechter reflektierend ausgebildet.

2. Leuchtanlage nach Anspruch 1, **dadurch gekennzeichnet, dass** die erste Reflektionsfläche (11) relativ zum Leuchtmittel (13) konkav ausgebildet ist.

3. Leuchtanlage nach Anspruch 2, **dadurch gekennzeichnet, dass** die erste Reflektionsfläche (11) in einem Schnitt parallel zur Rotationsachse (21) und diese berührend zumindest teilweise parabolisch ausgebildet ist.

4. Leuchtanlage nach Anspruch 3, **dadurch gekennzeichnet, dass** das Leuchtmittel (13) in einem Brennpunkt der zumindest teilweise parabolischen ersten Reflektionsfläche (11) angeordnet ist.

5. Leuchtanlage nach Anspruch 1, **dadurch gekennzeichnet, dass** die erste Reflektionsfläche (11) derart ausgebildet und das Leuchtmittel (13) derart angeordnet ist, dass das vom Leuchtmittel abgestrahlte Licht nur in einen Raum neben bzw. oberhalb einer definierten, senkrecht zur Rotationsachse (21) angeordneten Ebene abgestrahlt wird.

6. Leuchtanlage nach Anspruch 1, **dadurch gekennzeichnet, dass** die erste Reflektionsfläche (11) eine innere umlaufende Grenze (26) aufweist, die entlang einer Unterseite des Leuchtmittels (13) oder durch das Leuchtmittel hindurch verläuft.

7. Leuchtanlage nach Anspruch 1, **dadurch gekennzeichnet, dass** die zweite Reflektionsfläche (15) zumindest teilweise parabolisch ausgebildet ist, ebenso wie die erste Reflektionsfläche (11).

8. Leuchtanlage nach Anspruch 1, **dadurch gekennzeichnet, dass** das Leuchtmittel (13) relativ zur ersten Reflektionsfläche (11) und parallel zur Ringachse (19) oder Rotationsachse (21) verstellbar ist.

9. Leuchtanlage nach Anspruch 1, **dadurch gekennzeichnet, dass** als Leuchtmittel mehrere LEDs in einer ringförmigen Reihe angeordnet sind.

10. Leuchtanlage nach Anspruch 1, **gekennzeichnet durch** eine umlaufende zylindrische lichtdurchlässige Abdeckung dicht an einer äußeren umlaufenden Grenze (27) der ersten Reflektionsfläche (11).

11. Leuchtanlage nach Anspruch 10, **dadurch gekennzeichnet, dass** die Abdeckung (16) zumindest in einem umlaufenden Teilbereich lichtbrechende Elemente aufweist.

12. Leuchtanlage nach Anspruch 1, **gekennzeichnet durch** eine umlaufende konische lichtdurchlässige Abdeckung (16) mit einer umlaufenden Hauptwandung (54), deren Durchmesser in Richtung auf das Leuchtmittel (13) zunimmt, und mit einem an den größten Durchmesser der Hauptwandung (54) nach innen anschließenden Absatz (55), der sich in Richtung auf die erste Reflektionsfläche (11) erstreckt.

13. Leuchtanlage nach Anspruch 1, **dadurch gekennzeichnet, dass** die zweite Reflektionsfläche (15) mit Blenden versehen ist, die eine Abstrahlung des reflektierten Lichts in Richtung senkrecht zur Rotationsachse (21) verhindern.

14. Leuchtanlage nach Anspruch 1, **dadurch gekennzeichnet, dass** das vom Leuchtmittel (13) abgestrahlte Licht auf den ersten Reflektor (12) fällt, direkt aus der Leuchte (10) austritt oder auf weitere Teile im Gehäuse der Leuchte fällt, wobei die weiteren Teile Mittel zur Vermeidung einer Reflektion des Lichts aufweisen.

15. Leuchtanlage nach Anspruch 1, **gekennzeichnet durch** einen Träger, auf dem die erste Reflektionsfläche (11), eine Platine (34) zur Aufnahme elektrischer Bauteile und ein Gehäuse zur Aufnahme der Platine gehalten sind.

16. Windrotoranlage mit einer Leuchtanlage nach einem der Ansprüche 1 bis 15.

## Claims

1. A lighting installation (10), in particular as a danger light, obstruction light or daytime and night-time marker, having at least one luminaire (10, 63), with at least one lighting means (13) being arranged in a housing, and having the the following features:
a) the lighting means (13) is in the form of a ring or part of a ring and defines a ring axis (19),
b) the lighting means (13) is assigned at least a first reflector surface (11) which encircles entirely or partially an axis of rotation (21),
c) ring axis (19) and axis of rotation (21) run parallel to one another or even coaxially to one another.
d) the first reflector surface (11) is arranged below the lighting means (13),
e) a second reflector surface (15) lies opposite the first reflector surface (11) relative to the lighting means (13),
**characterized by** the following features:
f) an outer circumferential border (27) of the first reflector surface (11) lies in a border plane (24) that runs through the lighting means (13) or runs along an upper side of the lighting means,
g) the second reflector surface (15) is designed as having a poorer reflecting quality relative to the first reflector surface (11).

2. The lighting installation according to Claim 1, **characterized in that** the first reflector surface (11) has a concave configuration relative to the lighting means (13).

3. The lighting installation according to Claim 2, **characterized in that** the first reflector surface (11) assumes at least a partly parabolic configuration in a section parallel to the axis of rotation (21) and tangent to the latter.

4. The lighting installation according to Claim 3, **characterized in that** the lighting means (13) is arranged at a focal point of the at least partly parabolic first reflector surface (11).

5. The lighting installation according to Claim 1, **characterized in that** the first reflector surface (11) is configured and the lighting means (13) is arranged such that light emitted by the lighting means is directed only into a space adjacent to or above a defined plane disposed perpendicular to the axis of rotation (21).

6. The lighting installation according to Claim 1, **characterized in that** the first reflector surface (11) has an inner circumferential border (26) that runs along an underside of the lighting means (13) or through the lighting means.

7. The lighting installation according to Claim 1, **characterized in that** the second reflector surface (15) is configured to be at least partially parabolic, as is the first reflector surface (11).

8. The lighting installation according to Claim 1, **characterized in that** the lighting means (13) can be adjusted relative to the first reflector surface (11) and parallel to the ring axis (19) or axis of rotation (21).

9. The lighting installation according to Claim 1, **characterized in that** a plurality of LED lamps serving as lighting means are arranged in an annular row.

10. The lighting installation according to Claim 1, **characterized by** a circumferential, cylindrical and light-permeable covering tightly arranged on an outer circumferential border (27) of the first reflector surface (11).

11. The lighting installation according to Claim 10, **characterized in that** the covering (16) has light-refracting elements in at least one circumferential section.

12. The lighting installation according to Claim 1, **characterized by** a circumferential, conical, light-permeable covering (16) with a circumferential main wall (54), whose diameter increases in the direction of the lighting means (13), and with a shoulder (55), connected to the inner side at the greatest diamater of the main wall (54) and extending in the direction of the first reflector surface (11).

13. The lighting installation according to Claim 1, **characterized in that** the second reflector surface (15) is provided with diaphragms that prevent the reflected light from being emitted in a direction perpendicular to the axis of rotation (21).

14. The lighting installation according to Claim 1, **characterized in that** the light emitted by the lighting means (13) strikes the first reflector (12), is emitted directly from the luminaire (10) or strikes other parts of the luminaire housing, said other parts having means for preventing a reflection of the light.

15. The lighting installation according to Claim 1, **characterized by** a support on which the first reflector surface (11), a board (34) for accommodating electrical components and a board housing are mounted.

16. Wind-rotor installation having a lighting installation according to one of the Claims 1 to 15.

## Revendications

1. Dispositif d'éclairage, en particulier feu de danger, feu d'avertissement d'obstacle ou éclairage de jour et de nuit, comprenant au moins une lampe (10, 63), au moins un moyen d'éclairage (13) étant disposé dans un boîtier et présentant les caractéristiques suivantes :
a) le moyen d'éclairage (13) est réalisé sous forme annulaire et définit un axe annulaire (19),
b) au moins une première surface réfléchissante (11) de révolution complète ou partielle autour d'un axe de rotation (21) est associée au moyen d'éclairage (13),
c) l'axe annulaire (19) et l'axe de rotation (21) s'étendent parallèlement voire coaxialement l'un par rapport à l'autre,
d) la première surface réfléchissante (11) est disposée en dessous du moyen d'éclairage (13),
e) une deuxième surface réfléchissante (15) est située en face de la première surface réfléchissante (11) par rapport au moyen d'éclairage (13),
**caractérisé par** les caractéristiques suivantes :
f) une limite périphérique extérieure (27) de la première surface réfléchissante (11) est située dans un plan limite (24), qui traverse le moyen d'éclairage (13) ou qui s'étend le long d'un côté supérieur du moyen d'éclairage, et
g) la deuxième surface réfléchissante (15) est réalisée de manière à être moins réfléchissante que la première surface réfléchissante (11).

2. Dispositif d'éclairage selon la revendication 1, **caractérisé en ce que** la première surface réfléchissante (11) est réalisée sous forme concave par rapport au moyen d'éclairage (13).

3. Dispositif d'éclairage selon la revendication 2, **caractérisé en ce que** la première surface réfléchissante (11) est réalisée en coupe parallèlement à l'axe de rotation (21) et en contact avec celui-ci au moins en partie sous forme parabolique.

4. Dispositif d'éclairage selon la revendication 3, **caractérisé en ce que** le moyen d'éclairage (13) est disposé dans un foyer de la première surface réfléchissante (11) au moins partiellement parabolique.

5. Dispositif d'éclairage selon la revendication 1, **caractérisé en ce que** la première surface réfléchissante (11) est réalisée de telle sorte et le moyen d'éclairage (13) est disposé de telle sorte que la lumière émise par le moyen d'éclairage ne soit émise que dans un espace à côté ou au-dessus d'un plan défini, perpendiculaire à l'axe de rotation (21).

6. Dispositif d'éclairage selon la revendication 1, **caractérisé en ce que** la première surface réfléchissante (11) présente une limite périphérique intérieure (26) qui s'étend le long d'un côté inférieur du moyen d'éclairage (13) ou à travers le moyen d'éclairage.

7. Dispositif d'éclairage selon la revendication 1, **caractérisé en ce que** la deuxième surface réfléchissante (15) est réalisée au moins en partie sous forme parabolique, comme la première surface réfléchissante (11).

8. Dispositif d'éclairage selon la revendication 1, **caractérisé en ce que** le moyen d'éclairage (13) peut être réglé par rapport à la première surface réfléchissante (11) et parallèlement à l'axe annulaire (19) ou à l'axe de rotation (21).

9. Dispositif d'éclairage selon la revendication 1, **caractérisé en ce que** l'on utilise comme moyen d'éclairage plusieurs DEL disposées en rangée annulaire.

10. Dispositif d'éclairage selon la revendication 1, **caractérisé par** un recouvrement périphérique cylindrique transparent s'appliquant étroitement contre une limite périphérique extérieure (27) de la première surface réfléchissante (11).

11. Dispositif d'éclairage selon la revendication 10, **caractérisé en ce que** le recouvrement (16) présente au moins dans une région partielle périphérique des éléments réfringents.

12. Dispositif d'éclairage selon la revendication 1, **caractérisé par** un recouvrement périphérique conique transparent (16) avec une paroi principale périphérique (54), dont le diamètre augmente dans la direction du moyen d'éclairage (13), et comprenant un épaulement (55) se raccordant vers l'intérieur au plus grand diamètre de la paroi principale (54), lequel s'étend dans la direction de la première surface réfléchissante (11).

13. Dispositif d'éclairage selon la revendication 1, **caractérisé en ce que** la deuxième surface réfléchissante (15) est pourvue de diaphragmes qui empêchent une émission de la lumière réfléchie dans la direction perpendiculaire à l'axe de rotation (21).

14. Dispositif d'éclairage selon la revendication 1, **caractérisé en ce que** la lumière émise par le moyen d'éclairage (13) tombe sur le premier réflecteur (12), sort directement de la lampe (10) ou tombe sur d'autres parties dans le boîtier de la lampe, les autres parties présentant des moyens pour éviter une réflexion de la lumière.

15. Dispositif d'éclairage selon la revendication 1, **caractérisé par** un support sur lequel sont maintenus la première surface réfléchissante (11), une platine (34) pour recevoir des composants électriques et un boîtier pour recevoir la platine.

16. Eolienne munie d'un dispositif d'éclairage selon l'une quelconque des revendications 1 à 15.
